(19) Europäisches Patentamt
European Patent Office
Office européen des brevets

(11) **EP 4 395 132 A1**

(12) **EUROPEAN PATENT APPLICATION**
published in accordance with Art. 153(4) EPC

(43) Date of publication:
**03.07.2024 Bulletin 2024/27**

(51) International Patent Classification (IPC):
**H02K 1/2733** (2022.01)

(21) Application number: **22861415.2**

(52) Cooperative Patent Classification (CPC):
**H02K 1/2733;** Y02T 10/64

(22) Date of filing: **24.08.2022**

(86) International application number:
**PCT/JP2022/031940**

(87) International publication number:
**WO 2023/027127 (02.03.2023 Gazette 2023/09)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **26.08.2021 JP 2021138125**

(71) Applicant: **TDK Corporation**
**Tokyo 103-6128 (JP)**

(72) Inventors:
• **FUJIWARA, Ryogen**
**Tokyo 103-6128 (JP)**
• **SHIMBO, Nobuyuki**
**Tokyo 103-6128 (JP)**

(74) Representative: **Epping - Hermann - Fischer Patentanwaltsgesellschaft mbH Schloßschmidstraße 5 80639 München (DE)**

(54) **ROTOR AND MOTOR**

(57) A rotor 10 includes a ferromagnetic shaft 12 and a tubular magnet 14 covering an outer circumferential surface of the ferromagnetic shaft 12. A magnetization easy axis of the tubular magnet 14 is oriented in a radial direction.

*Fig.1*

## Description

### Technical Field

The present invention relates to a rotor and a motor.

### Background Art

Conventionally, a surface permanent magnet attachment type motor (surface permanent magnet motor (SPM)) has been known.

### Citation List

### Patent Literature

Patent Literature 1: Japanese Unexamined Patent Publication No. 2015-92792
Patent Literature 2: Japanese Patent No. 5089979

### Summary of Invention

### Technical Problem

However, in the conventional structure, it is difficult to obtain a sufficiently large torque when a diameter is reduced.
The present invention has been made in view of the above problem, and an object of the present invention is to provide a rotor capable of increasing torque even when the diameter is reduced, and a motor using the rotor.

### Solution to Problem

[1] A rotor including:

a ferromagnetic shaft; and
a tubular magnet covering an outer circumferential surface of the ferromagnetic shaft,
in which a magnetization easy axis of the tubular magnet is oriented in a radial direction.

[2] The rotor according to [1], in which the ferromagnetic shaft and the tubular magnet are in direct contact.
[3] The rotor according to [1] or [2], in which the tubular magnet has an inner diameter of 2 mm or less.
[4] The rotor according to any one of [1] to [3], in which an inner diameter d1 of the tubular magnet and an axial length L of the tubular magnet satisfy a formula below.

$$1 \leq L/d1$$

[5] The rotor according to any one of [1] to [4], in which the tubular magnet has a thickness of 10 to 300 $\mu$m.
[6] The rotor according to any one of [1] to [5], in which a thickness distribution (coefficient of variation) of the tubular magnet is 50 $\mu$m or less.
[7] The rotor according to any one of [1] to [6], in which an outer circumferential surface of the tubular magnet has a surface roughness Rz of 20 $\mu$m or less.
[8] The rotor according to any one of [1] to [7], in which each of both end portion of the ferromagnetic shaft includes an exposed portion configured to be uncovered with the tubular magnet.
[9] The rotor according to any one of [1] to [8], in which the tubular magnet is magnetized in a radial direction, and an outer circumferential surface of the tubular magnet includes four or more magnetic poles.
[10] The rotor according to any one of [1] to [9], in which the ferromagnetic shaft includes a cobalt columnar body and the tubular magnet is a samarium cobalt magnet.

[11] The rotor according to [10], in which the samarium cobalt magnet includes a $SmCo_5$ magnet, and a portion of the ferromagnetic shaft covered with the tubular magnet includes a $Sm_2Co_{17}$ layer and a cobalt columnar body in order from a side of the tubular magnet.

[12] A motor including: the rotor according to any one of [1] to [11]; and a stator.

[13] The motor according to [12], further including a tubular container configured to house the rotor and the stator, in which the container has an outer diameter of 3 mm or less.

## Advantageous Effects of Invention

According to the present invention, a rotor capable of increasing torque even when downsized, and a motor using the rotor are provided.

## Brief Description of Drawings

FIG. 1 is a perspective view of a rotor 10 according to an embodiment.

FIG. 2 is a cross-sectional view perpendicular to an axial direction of the rotor 10 in FIG. 1, and EA represents a magnetization easy axis.

FIGS. 3(a) to 3(d) are views illustrating an example of the vicinity of a tubular magnet 14 in a cross section including a shaft of the rotor 10.

FIGS. 4(a) to 4(c) are schematic diagrams illustrating an example of an arrangement of magnetization (magnetic pole) in the rotor 10 of FIG. 2.

FIG. 5(a) is a schematic axial cross-sectional view of a motor 100 using the rotor 10 of FIG. 1, and FIG. 5(b) is a cross-sectional view perpendicular to an axial direction of FIG. 5(a).

FIG. 6 is a cross-sectional view perpendicular to an axial direction of a motor 100 according to another embodiment.

## Description of Embodiments

A rotor according to an embodiment of the present invention will be described with reference to the drawings. The rotor 10 according to the present embodiment includes a shaft 12 and a tubular magnet 14.

The shaft 12 has a columnar shape such as a cylindrical shape. The material of the shaft 12 may be a ferromagnetic material. Examples of the ferromagnetic material include Fe, FeNi, Ni, FeCo, Co, and SUS430.

The tubular magnet 14 covers an entire outer circumferential surface of the shaft 12 in a circumferential direction. In other words, the tubular magnet 14 has a seamless integral structure without a joint such as an adhesive layer or a gap over the entire circumference in the circumferential direction of the shaft 12. The tubular magnet can be cylindrical tube in shape.

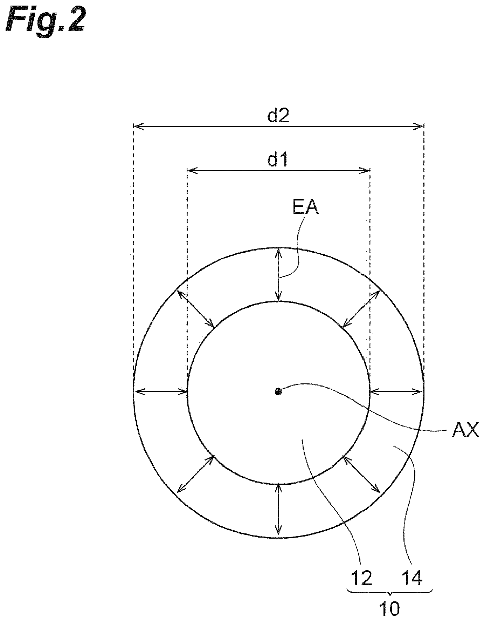

FIG. 2 is a cross-sectional view in a direction perpendicular to an axis of the rotor 10. As illustrated in FIG. 2, each of magnetization easy axes EA of the tubular magnet 14 is oriented in a radial direction. The "orientation in the radial direction" means that the magnetization easy axes EA are radially arranged about a central axis AX of the shaft when the rotor 10 is viewed from the axial direction of the shaft 12.

The orientation of the magnetization easy axis in the radial direction can be confirmed by crystal orientation analysis or surface magnetic field distribution measurement.

The tubular magnet 14 may be a permanent magnet, and may be, for example, an alloy magnet such as an alnico magnet (Fe-Al-Ni-Co magnet) or an Fe-Cr-Co magnet, or a rare earth magnet such as a samarium cobalt magnet, an R-T-B (R represents a rare earth element such as Nd or Pr, and T represents a transition metal such as Fe.)-based magnet, or an R-T-based magnet. Among them, the tubular magnet 14 is preferably a samarium cobalt magnet. The samarium cobalt magnet may be a $SmCo_5$ system (1-5 system: $CaCu_5$ type) or a $Sm_2Co_{17}$ system (2-17 system: $Th_2Zn_{17}$ type), but a $SmCo_5$ system (1-5 system: CaCus type) is preferable.

In particular, in a case where the tubular magnet is a $SmCo_5$ magnet, it is preferable that the shaft 12 has a cobalt columnar body, an outer surface of an exposed portion 12E of the shaft 12 is made of cobalt, and the portion of the shaft 12 covered by the tubular magnet 14 includes a $Sm_2Co_{17}$ layer and a cobalt columnar body in order from the outside. A thickness of the $Sm_2Co_{17}$ layer may be 3 to 20 $\mu$m, and may be 1 to 20 $\mu$m. The cobalt columnar body is a concept including a cobalt tubular body.

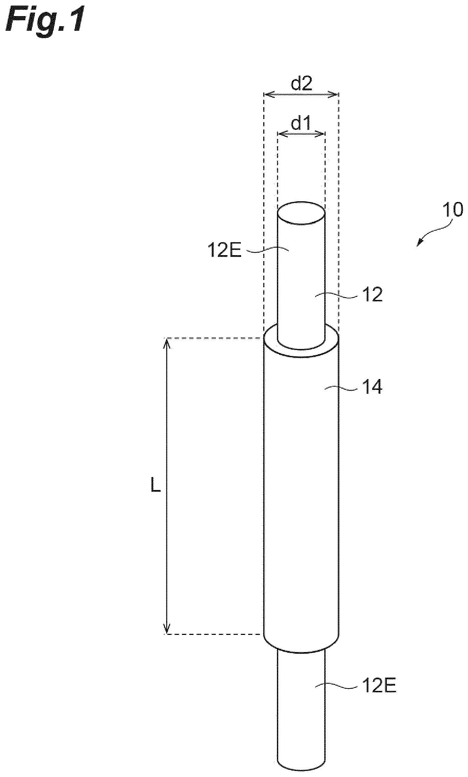

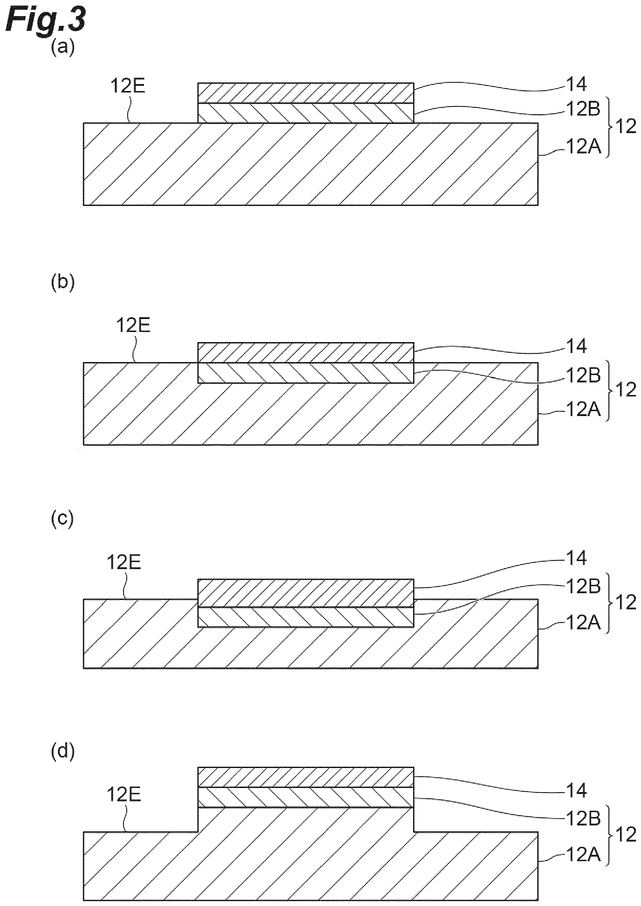

FIGS. 3(a) to 3(d) are examples of cross-sectional views of the periphery of the tubular magnet in a cross section including an axis of the rotor of FIG. 1, and illustrate the ferromagnetic shaft 12 including a cobalt columnar body 12A and a $Sm_2Co_{17}$ layer 12B, and the tubular magnet 14. For example, in FIG. 3(a), the $Sm_2Co_{17}$ layer 12B and the

tubular magnet (SmCo$_5$ magnet) 14 are sequentially formed on an outer surface of the cobalt columnar body 12A. In FIG. 3(b), the Sm$_2$Co$_{17}$ layer 12B is formed inside the cobalt columnar body 12A, and the tubular magnet (SmCo$_5$ magnet) 14 is formed on the Sm$_2$Co$_{17}$ layer 12B. In FIG. 3(c), the Sm$_2$Co$_{17}$ layer 12B is formed inside the cobalt columnar body 12A, and a part of the tubular magnet (SmCo$_5$ magnet) 14 formed on the Sm$_2$Co$_{17}$ layer 12B also enters the shaft 12. In FIG. 3(d), a part of the cobalt columnar body 12A protrudes radially outward, and the Sm$_2$Co$_{17}$ layer 12B and the tubular magnet (SmCo$_5$ magnet) 14 are sequentially formed on the protruding portion.

In the present embodiment, the tubular magnet 14 and the outer surface of the ferromagnetic shaft 12 are in direct contact with each other, and a non-magnetic layer such as an oxide layer, a protective layer of the magnet like a resin layer, and an adhesive layer are not interposed therebetween.

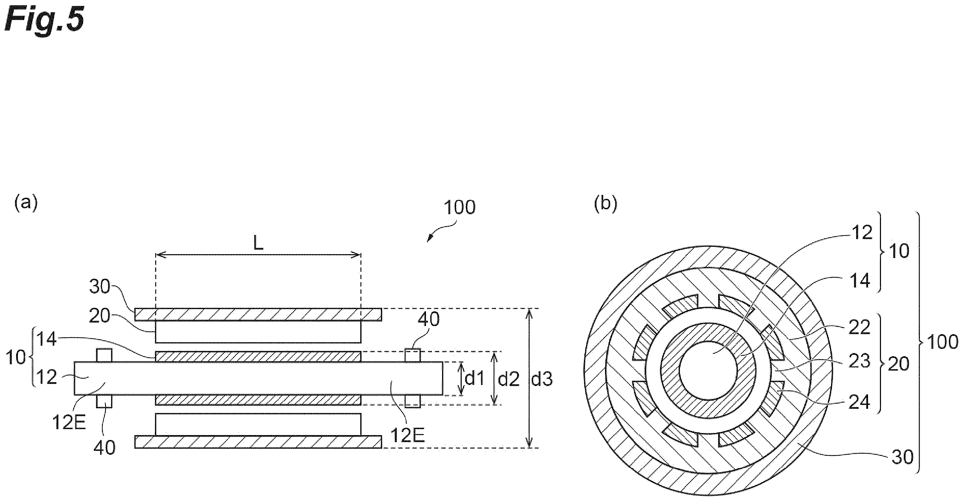

As illustrated in FIG. 1, the exposed portions 12E on which the tubular magnet 14 is not formed are provided at both ends of the outer circumferential surface of the shaft 12. The surface of the exposed portions 12E can be a cobalt layer, or can be a layer of a material having low reactivity such as molybdenum, tantalum, or niobium. An axial length of each of the exposed portions 12E can be 1 to 50 mm. Each of the exposed portions 12E can be supported by a bearing 40 (cf. FIG. 5) to be described later. Note that even in a case where the outermost layer of the shaft 12 is the Sm$_2$Co$_{17}$ layer in the portion covered by the tubular magnet 14, the surface of the exposed portions 12E can be a cobalt layer.

The axial length L of the tubular magnet 14 can be, for example, 0.2 to 100 mm. An inner diameter d1 of the tubular magnet can be 0.03 to 10 mm. The inner diameter d1 may be 2 mm or less. An outer diameter d2 of the tubular magnet can be 0.05 to 20 mm.

The inner diameter d1 of the tubular magnet 14 and the axial length L of the tubular magnet 14 can satisfy the following formula.

$$1 \leq L/d1$$

The value L/d1 may be 2 or more, 3 or more, 5 or more, or 10 or more.

A thickness (d2 - d1)/2 of the tubular magnet can be 10 to 300 $\mu$m. A thickness distribution (coefficient of variation) of the tubular magnet 14 may be 50 $\mu$m or less. The coefficient of variation can be calculated from a thickness at each measurement points distributed in a lattice shape defined by trisection by length in the axial direction and quadrisection in the circumferential direction. A small variation in thickness means that an average thickness of the tubular magnet is substantially equal.

A surface roughness Rz of the outer circumferential surface of the tubular magnet 14 can be 20 $\mu$m or less. The surface roughness Rz is defined by a maximum difference in height in the circumferential direction and the axial direction.

A size of the shaft 12 is not particularly limited. The axial length of the shaft 12 can be, for example, 2 to 100 mm. An outer diameter of the exposed portion 12E of the shaft 12 can be 0.2 to 3 mm. An outer diameter of the portion of the shaft 12 covered with the tubular magnet 14 can be 0.2 to 10 mm.

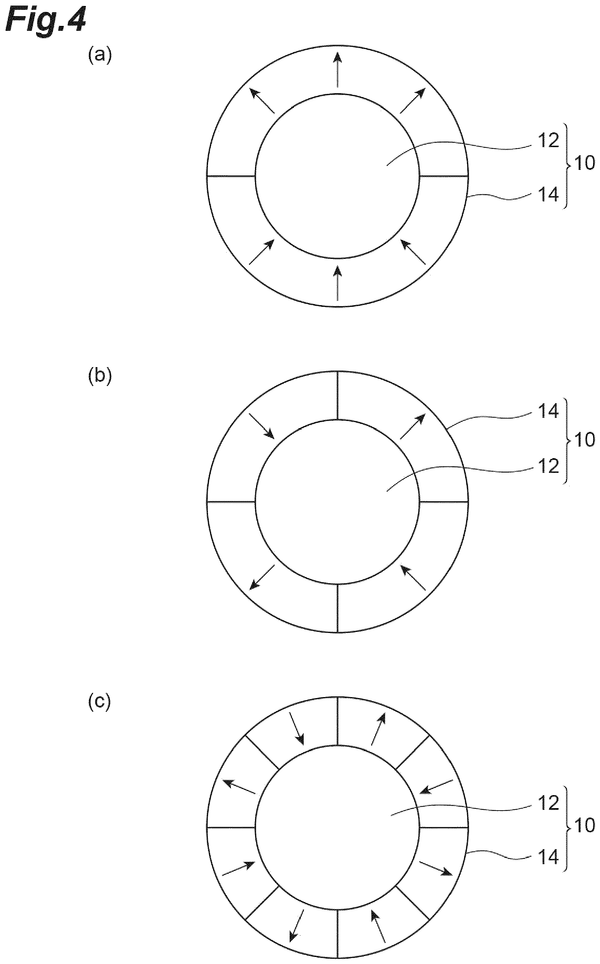

The tubular magnet 14 is magnetized in the radial direction along the magnetization easy axis. The tubular magnet 14 includes two or more magnetic poles on the outer circumferential surface. For example, as illustrated in FIG. 4(a), the outer circumferential surface may include two poles, as illustrated in FIG. 4(b), the outer circumferential surface may include four poles, and as illustrated in FIG. 4(c), the outer circumferential surface may include eight poles.

(Manufacturing Method of Rotor)

Next, an example of a manufacturing method of the rotor will be described. Here, a case where the tubular magnet is a SmCo$_5$ layer will be described.

First, a ferromagnetic shaft such as a cobalt rod is prepared. Next, an electrolytic plating step of forming a tubular magnetic material layer on the outer circumferential surface of the ferromagnetic shaft by an electrolytic plating method, and a subsequent heat treatment step of heat-treating the obtained tubular magnetic material layer to form a magnet material layer in which a magnetization easy axis is oriented in the radial direction are performed. As a method of forming the magnetic material layer, a molten salt immersion method of immersing cobalt in a liquid obtained by dissolving Sm metal in a molten salt of LiCl to alter the surface, or a method of forming a film of Sm metal on cobalt by vacuum deposition and diffusing the Sm metal may be used.

(Motor)

Next, an example of a motor using the rotor 10 according to the above embodiment will be described. FIG. 5(a) is a cross-sectional view along an axial direction of a motor 100 according to an embodiment, and FIG. 5(b) is a cross-sectional view perpendicular to an axis of FIG. 5(a).

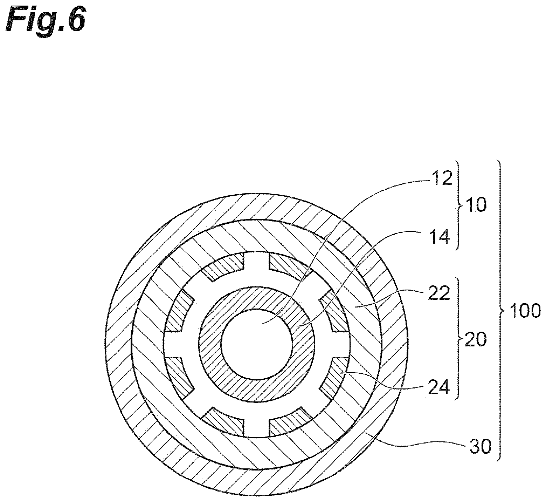

The motor 100 includes a rotor 10, a stator 20, and a container 30. The stator 20 having a tubular shape is disposed so as to surround the outer circumferential surface of the tubular magnet 14 of the rotor 10. As illustrated in FIG. 5(b), the stator 20 can include a yoke 22, teeth 23, and a coil 24. The specific structures of the yoke 22, the teeth 23, and the coil 24 of the stator 20 are not limited, and various structures can be adopted. For example, as illustrated in FIG. 6, the stator 20 may include the yoke 22 and the coil 24 and may not include teeth. Furthermore, the coil 24 can have a structure in which a coreless winding having a tubular shape or a flexible printed circuit board is wound. Furthermore, the torque can be increased by making yoke 22 of a magnetic material. Meanwhile, the friction can be reduced by intentionally using a non-magnetic material because a magnetic attractive force generated between the rotor and the stator can be reduced.

The container 30 has a tubular shape which is covering an outer circumferential surface of the stator 20. The material of the container 30 is not particularly limited, but for example, a non-magnetic material such as austenitic stainless steel or copper; and a magnetic material such as ferritic or martensitic stainless steel, an electromagnetic steel sheet, FeNi, Ni, and SUS430, or the like can be used.

An outer diameter d3 of the container 30 can be 3 mm or less.

A gap between an outer circumferential surface of the tubular magnet 14 of the rotor 10 and an inner circumferential surface of the stator 20 can be 0.01 to 0.5 mm.

Each of the exposed portions 12E of the shaft 12 can be supported by a bearing 40. The bearing 40 is not particularly limited, and various bearings such as sliding bearings can be used.

(Action and Effect)

Since the rotor according to the present embodiment includes the tubular magnet 14, therefore the magnet has no joint, and a volume ratio of the magnet can be easily increased even if the rotor 10 is downsized. Therefore, it is easy to improve the torque of the motor. Furthermore, since the magnetization easy axis EA of the tubular magnet 14 is oriented in the radial direction, the magnetization of the rotor can be easily magnetized in the radial direction, and the torque can be easily increased even if the rotor is downsized.

Furthermore, since a protective film of a magnet such as a resin or an oxide film, an adhesive layer, and the like do not exist between the tubular magnet 14 and the shaft 12, a ratio of the non-magnetic layer in the rotor is reduced, a ratio of the magnet can be increased, and the torque of the motor can be more easily improved.

Furthermore, when $1 \leq L/d1$ is satisfied, it is possible to lengthen the axis even with a small diameter, so that the torque of the motor can be more easily improved.

Moreover, when the surface roughness of the outer circumferential surface of the tubular magnet 14 is small, or the coefficient of variation of the thickness of the tubular magnet 14 is less than or equal to a certain value, the distance between the outer circumferential surface of the tubular magnet of the rotor and the inner surface of the stator can be reduced, so that the driving torque is further increased.

Furthermore, when the exposed portions 12E are provided at both ends of the shaft 12, the both ends can be supported by the bearings 40. When the tubular magnet is present in the portion supported by the bearing 40, an electromagnetic force that hinders driving may be generated by rotation. However, by supporting the exposed portion 12E by the bearing 40, unnecessary electromagnetic force is reduced. When the bearing 40 is a sliding bearing, it is suitable for downsizing.

Since the motor according to the present embodiment includes the radially oriented tubular magnet 14, it is easy to increase the torque even if the rotor is downsized.

Furthermore, in a case where the coil 24 is a coreless winding having a tubular shape or a flexible printed circuit board, it is suitable for downsizing.

Furthermore, in a case where the stator 20 has a structure including the teeth 23, a magnetic flux interlinking the coils 24 increases, and thus, the rotational torque increases.

The present invention is not limited to the above embodiments, and various modifications are possible.

For example, in the above embodiments, the ferromagnetic shaft 12 and the tubular magnet 14 are in direct contact with each other without a non-magnetic layer interposed therebetween, but a non-magnetic layer (for example, an oxide layer, a resin layer, an adhesive layer, and the like) of about 5 μm or less may be interposed therebetween.

Furthermore, the fine shape of the shaft 12 and the tubular magnet 14 is not limited, and various shapes can be taken according to the object.

**Examples**

(Comparative Example 1)

A motor of Comparative Example 1 including the following rotor and stator was manufactured.

(Rotor of Comparative Example 1)

A cylindrical Co shaft having an outer diameter of 0.9 mm and a length of 20 mm was prepared. Next, a tubular SmCo$_5$ sintered magnet having an inner diameter of 1 mm, an outer diameter of 1.2 mm, a thickness of 100 μm, and an axial length L of 10 mm was prepared. The tubular magnet was fixed to an axial center portion of the outer circumferential surface of the Co shaft with a resin adhesive to obtain the rotor of Comparative Example 1. A magnetization easy axis of the tubular magnet was a parallel direction orthogonal to the axial direction of the Co shaft. A magnetization direction of the tubular magnet was set to the same direction (parallel orientation) as the magnetization easy axis, and the number of poles of the outer circumferential surface of the tubular magnet was set to two. The magnetization was performed by disposing the tubular magnet in an air-core coil so that the generated magnetic field and the magnetization easy axis were in substantially the same direction, and applying a pulse current to the air-core coil.

(Stator of Comparative Example 1)

A container made of SUS430 having an inner diameter of 2 mm was prepared. The stator of Comparative Example 1 was disposed in a container with a yoke and a coil as illustrated in FIG. 6. A thickness of the yoke was 0.3 mm. The number of coils in the stator was three, and the number of turns per coil was three. Each coil is star-connected and connected to a motor drive circuit (not shown). The motor drive circuit controls a current value of an alternating current energized to each conductor constituting the coil from a signal obtained by a position detector (not shown). Note that a total number of conductors of the stator is given by a product of twice the number of coils and the number of turns, and an electrical loading is given by a product of the total number of conductors and the current value, and these are shown in Table 1.

(Example 1)

A motor of Example 1 including the following rotor and stator was manufactured.

(Rotor of Example 1)

A cylindrical Co shaft having an outer diameter of about 1 mm and a length of 20 mm was prepared. Next, a tubular Co member having an inner diameter of about 1 mm, an outer diameter of about 1.2 mm, a thickness of 100 μm, and an axial length L of 10 mm was prepared. A magnetic material layer of SmCo$_2$ was formed on both the inner circumferential surface and the outer circumferential surface of the tubular Co member by a molten salt immersion method, and heat-treated to form a SmCo$_5$ tubular magnet remaining no pure Co phase. Specifically, to LiCl melted by heating to 700°C, Sm metal was added so as to be 1 mol/L, and the Co shaft was immersed in the molten salt. The immersion time was set to 4 hours. The heat treatment was performed in an Ar atmosphere at 1050°C for 18 hours. The tubular magnet was fixed to an axially central portion of the outer circumferential surface of the Co shaft with a resin adhesive to obtain the rotor of Example 1. The magnetization easy axis of the tubular magnet was oriented in the radial direction, the magnetization direction was also the same direction as the magnetization easy axis (radial orientation), and the number of poles of the outer circumferential surface of the tubular magnet was two. The magnetization was performed by applying a pulse current to a magnetization yoke for two-pole radial magnetization.

(Stator of Example 1)

The stator of Example 1 was the same as the stator of Comparative Example 1.

(Example 2)

A motor of Example 2 including the following rotor and stator was manufactured.

(Rotor of Example 2)

A cylindrical Co shaft having an outer diameter of about 1 mm and a length of 20 mm was prepared. Next, a magnetic material layer of $SmCo_2$ was formed on the outer circumferential surface of the Co shaft by a molten salt immersion method, and then heat treatment was performed to form a $SmCo_5$ tubular magnet, thereby obtaining the rotor of Example 2. Specifically, to LiCl melted by heating to 700°C, Sm metal was added so as to be 1 mol/L, and the Co shaft was immersed in the molten salt. The immersion time was 9 hours. The heat treatment was performed in an Ar atmosphere at 1050°C for 24 hours. In Example 2, the $SmCo_5$ tubular magnet was formed directly on the $Sm_2Co_{17}$ layer formed on the Co shaft by the heat treatment. That is, in the present Example, the Co shaft and the $Sm_2Co_{17}$ layer constituted a ferromagnetic shaft as a base material on whose outer circumferential surface a tubular magnet was formed, and the ferromagnetic shaft and the tubular magnet were in direct contact with each other. An inner diameter of the tubular magnet and an outer diameter of the ferromagnetic shaft were 1 mm, an outer diameter of the tubular magnet was 1.2 mm, a thickness of the tubular magnet was 100 $\mu$m, and an axial length L of the tubular magnet was 10 mm. The magnetization easy axis of the tubular magnet was oriented in the radial direction, the magnetization direction was also the same direction as the magnetization easy axis (radial orientation), and the number of poles of the outer circumferential surface of the tubular magnet was two. The magnetization was performed by applying a pulse current to a magnetization yoke for two-pole radial magnetization as in Example 1.

(Stator of Example 2)

The stator of Example 2 was the same as the stator of Comparative Example 1.

(Evaluation)

An alternating current having a current value of 10 mArms was supplied to each conductor of the obtained motor, and torque was measured. The results are shown in Table 1.
In Examples 1 and 2 having the radially oriented tubular magnet, the torque increased as compared with Comparative Example 1 having the parallel oriented tubular magnet. In Example 2 in which the ferromagnetic shaft and the tubular magnet were in direct contact with each other, the torque was further improved as compared with Example 1.

[Table 1]

| Table 1 | | Comp. Example 1 | Example 1 | Example 2 | Example 3 | Example 4 | Example 5 | Example 6 | Example 7 |
|---|---|---|---|---|---|---|---|---|---|
| Number of poles of outer circumferential surface of tubular magnet | P | 2 | 2 | 2 | 4 | 4 | 6 | 8 | 8 |
| Number of coils of stator | S | 3 | 3 | 3 | 6 | 3 | 9 | 12 | 6 |
| Number of turns per coil | n | 3 | 3 | 3 | 3 | 3 | 3 | 3 | 3 |
| Total number of conductors (turns×2×number of coils) | N | 18 | 18 | 18 | 36 | 18 | 54 | 72 | 36 |
| Current per conductor | I | 10.0 | 10.0 | 10.0 | 5.0 | 10.0 | 3.3 | 2.5 | 5.0 |
| Electrical loading (total number of conductors× current value) | NI | 180 | 180 | 180 | 180 | 180 | 180 | 180 | 180 |
| Magnetization easy axis and magnetization direction of tublar magnet | | Parallel orientation (direction orthogonal to axis) | Radial orientation | Radial orientation | Radial orientation | Radial orientation | Radial orientation | Radial orientation | Radial orientation |
| Material of portion of ferromagnetic shaft where tubular magnet is provided | | Co | Co | Co + $Sm_2Co_{17}$ layer | Co + $Sm_2Co_{17}$ layer | Co + $Sm_2Co_{17}$ layer | Co + $Sm_2Co_{17}$ layer | Co + $Sm_2Co_{17}$ layer | Co + $Sm_2Co_{17}$ layer |
| Inner diameter d1 [mm] of tubular magnet | | 1 | 1 | 1 | 1 | 1 | 1 | 1 | 1 |
| Outer diameter [mm] of ferromagnetic shaft | | 0.9 | 1 | 1 | 1 | 1 | 1 | 1 | 1 |
| Relationship between ferromagnetic shaft and tubular magnet | | Non-direct contact | Non-direct contact | Direct contact | Direct contact | Direct contact | Direct contact | Direct contact | Direct contact |
| Cylindrical magnet composition and manufacturing method | | $SmCo_5$ Sintering | $SMCO_5$ Molten salt immersion | $SmCo_5$ Molten salt immersion | $SmCo_5$ Molten salt immersion | $SmCo_5$ Molten salt immersion | $SmCo_5$ Molten salt immersion | $SmCo_5$ Molten salt immersion | $SmCo_5$ Molten salt immersion |

(continued)

| Table 1 | Comp. Example 1 | Example 1 | Example 2 | Example 3 | Example 4 | Example 5 | Example 6 | Example 7 |
|---|---|---|---|---|---|---|---|---|
| Thickness [μm] of tubular magnet | 100 | 100 | 100 | 100 | 100 | 100 | 100 | 100 |
| Axial length L [mm] of tubular magnet | 10 | 10 | 10 | 10 | 10 | 10 | 10 | 10 |
| Outer diameter d2 [mm] of tubular magnet | 1.2 | 1.2 | 1.2 | 1.2 | 1.2 | 1.2 | 1.2 | 1.2 |
| Material of container | SUS430 | SUS430 | SUS430 | SUS430 | SUS430 | SUS430 | SUS430 | SUS430 |
| Thickness [mm] of yoke | 0.3 | 0.3 | 0.3 | 0.3 | 0.3 | 0.3 | 0.3 | 0.3 |
| Inner diameter [mm] of container | 2 | 2 | 2 | 2 | 2 | 2 | 2 | 2 |
| Torque [$\times 10^{-6}$ N·m] | 0.205 | 0.249 | 0.254 | 0.311 | 0.407 | 0.299 | 0.264 | 0.444 |

(Adjustment of Number of Poles of Tubular Magnet)

(Example 3)

A motor of Example 3 including the following rotor and stator was manufactured.

(Rotor of Example 3)

The rotor of Example 3 was obtained in the same manner as in Example 2 except that the number of poles of the outer circumferential surface of the tubular magnet was four.

(Stator of Example 3)

The stator of Example 3 was similar to that of Example 2 except that the number of coils was changed from three to six. Note that by setting the current value per conductor to 5.0 mArms, the electrical loading was made the same as in Example 2. The magnetization was performed by applying a pulse current to a magnetization yoke for four-pole radial magnetization.

(Example 4)

A motor according to the example including the following rotor and stator was manufactured.

(Rotor of Example 4)

The rotor of Example 4 was the same as the rotor of Example 3.

(Stator of Example 4)

The stator of Example 4 was the same as the stator of Example 2.

(Example 5)

A motor of Example 5 including the following rotor and stator was manufactured.

(Rotor of Example 5)

The rotor of Example 5 was obtained in the same manner as in Example 2 except that the number of poles of the outer circumferential surface of the tubular magnet was six. The magnetization was performed by applying a pulse current to a magnetization yoke for six-pole radial magnetization.

(Stator of Example 5)

The stator of Example 5 was similar to the stator of Example 2 except that the number of coils was changed from three to nine. Note that by setting the current value per conductor to 3.3 mArms, the electrical loading was made the same as in Example 2.

(Example 6)

A motor of Example 6 including the following rotor and stator was manufactured.

(Rotor of Example 6)

The rotor of Example 6 was obtained in the same manner as in Example 2 except that the number of poles of the outer circumferential surface of the tubular magnet was eight. The magnetization was performed by applying a pulse current to a magnetization yoke for eight-pole radial magnetization.

(Stator of Example 6)

The stator of Example 6 was similar to the stator of Example 2 except that the number of coils was changed from three to 12. Note that by setting the current value per conductor to 2.5 mArms, the electrical loading was made the same as in Example 2.

(Example 7)

A motor of Example 7 including the following rotor and stator was manufactured.

(Rotor of Example 7)

The rotor of Example 7 was the same as the rotor of Example 6.
The stator of Example 7 was similar to the stator of Example 2 except that the number of coils was changed from three to six. Note that by setting the current value per conductor to 5.0 mArms, the electrical loading was made the same as in Example 2.
The results are shown in Table 1. When the number of poles of the outer circumferential surface of the tubular magnet of the rotor is four or more, it is particularly easy to improve the torque.

(Example 8)

A motor of Example 8 including the following rotor and stator was manufactured.

(Rotor of Example 8)

The rotor of Example 8 was obtained in the same manner as in Example 2 except that a cylindrical Co shaft having an outer diameter of about 1 mm and a length of 11 mm was prepared, the number of poles of the outer circumferential surface of the tubular magnet was set to 4, and an axial length L of the tubular magnet was set to 0.9 mm.

(Stator of Example 8)

The stator of Example 8 was similar to the stator of Example 2 except that the number of coils was changed from three to six. Note that by setting the current value per conductor to 5.0 mArms, the electrical loading was made the same as in Example 2.

(Example 9)

A motor of Example 9 including the following rotor and stator was manufactured.

(Rotor of Example 9)

The rotor of Example 9 was obtained in the same manner as in Example 8 except that the axial length L of the tubular magnet was 1 mm.

(Stator of Example 9)

The stator of Example 9 was the same as the stator of Example 8.

(Example 10)

A motor of Example 10 including the following rotor and stator was manufactured.

(Rotor of Example 10)

The rotor of Example 10 was obtained in the same manner as in Example 8 except that a cylindrical Co shaft having an outer diameter of about 1 mm and a length of 12 mm was prepared and an axial length L of the tubular magnet was 2 mm.

(Stator of Example 10)

The stator of Example 10 was the same as the stator of Example 8.

(Example 11)

A motor of Example 11 including the following rotor and stator was manufactured.

(Rotor of Example 11)

The rotor of Example 11 was obtained in the same manner as in Example 8 except that a cylindrical Co shaft having an outer diameter of about 1 mm and a length of 15 mm was prepared and an axial length L of the tubular magnet was 5 mm.

(Stator of Example 11)

The stator of Example 11 was the same as the stator of Example 8.

(Example 12)

A motor of Example 12 including the following rotor and stator was manufactured.

(Rotor of Example 12)

The rotor of Example 12 was obtained in the same manner as in Example 8 except that a cylindrical Co shaft having an outer diameter of about 1 mm and a length of 20 mm was prepared and an axial length L of the tubular magnet was 10 mm.

(Stator of Example 12)

The stator of Example 12 was the same as the stator of Example 8.

(Example 13)

A motor of Example 13 including the following rotor and stator was manufactured.

(Rotor of Example 13)

The rotor of Example 13 was obtained in the same manner as in Example 8 except that a cylindrical Co shaft having an outer diameter of about 1 mm and a length of 30 mm was prepared and an axial length L of the tubular magnet was 20 mm.

(Stator of Example 13)

The stator of Example 13 was the same as the stator of Example 8.
The results are shown in Table 2. Note that a torque ratio indicates a ratio (%) of the torque based on the torque of Example 13.
In Examples 9 to 13 in which $1 \leq L/d1$ is satisfied, the torque is easily increased as compared with Example 8.

[Table 2]

| Table 2 | Example 8 | Example 9 | Example 10 | Example 11 | Example 12 | Example 13 |
|---|---|---|---|---|---|---|
| Number of poles of outer circumferential surface of tubular magnet | 4 | 4 | 4 | 4 | 4 | 4 |

(continued)

| Table 2 | Example 8 | Example 9 | Example 10 | Example 11 | Example 12 | Example 13 |
|---|---|---|---|---|---|---|
| Number of coils of stator | 6 | 6 | 6 | 6 | 6 | 6 |
| Number n of turns per coil | 3 | 3 | 3 | 3 | 3 | 3 |
| Total number of conductors (turns$\times$2$\times$ number of coils) N | 36 | 36 | 36 | 36 | 36 | 36 |
| Current I per conductor | 5.0 | 5.0 | 5.0 | 5.0 | 5.0 | 5.0 |
| Electrical loading (total number of conductors $\times$current value) NI | 180 | 180 | 180 | 180 | 180 | 180 |
| Magnetization easy axis and magnetization direction of tubular magnet | Radial orientation | Radial orientation | Radial orientation | Radial orientation | Radial orientation | Radial orientation |
| Material of portion of ferromagnetic shaft where tubular magnet is provided | Co + $Sm_2Co_{17}$ layer | Co + $Sm_2Co_{17}$ layer | Co + $Sm_2Co_{17}$ layer | Co + $Sm_2Co_{17}$ layer | Co + $Sm_2Co_{17}$ layer | Co + $Sm_2Co_{17}$ layer |
| Inner diameter d1 [mm] of tubular magnet | 1 | 1 | 1 | 1 | 1 | 1 |
| Outer diameter [mm] of shaft | 1 | 1 | 1 | 1 | 1 | 1 |
| Relationship between ferromagnetic shaft and tubular magnet | Direct contact | Direct contact | Direct contact | Direct contact | Direct contact | Direct contact |
| Cylindrical magnet composition and manufacturing method | $SmCo_5$ Molten salt immersion | $SmCo_5$ Molten salt immersion | $SmCo_5$ Molten salt immersion | $SmCo_5$ Molten salt immersion | $SmCo_5$ Molten salt immersion | $SmCo_5$ Molten salt immersion |
| Thickness [$\mu$m] of tubular magnet | 100 | 100 | 100 | 100 | 100 | 100 |
| Axial length L [mm] of tubular magnet | 0.9 | 1 | 2 | 5 | 10 | 20 |
| Outer diameter d2 [mm] of tubular magnet | 1.2 | 1.2 | 1.2 | 1.2 | 1.2 | 1.2 |
| Material of container | SUS430 | SUS430 | SUS430 | SUS430 | SUS430 | SUS430 |
| Thickness [mm] of yoke | 0.2 | 0.2 | 0.2 | 0.2 | 0.2 | 0.2 |
| Inner diameter [mm] of container | 2 | 2 | 2 | 2 | 2 | 2 |

(continued)

| Table 2 | Example 8 | Example 9 | Example 10 | Example 11 | Example 12 | Example 13 |
|---|---|---|---|---|---|---|
| LId 1 | 0.9 | 1 | 2 | 5 | 10 | 20 |
| Torque ratio | 88 | 90 | 95 | 98 | 99 | 100 |
| Torque [$\times 10^{-6}$N·m] | 0.0533 | 0.0600 | 0.1274 | 0.3294 | 0.6660 | 1.3393 |

(Adjustment of Thickness of Tubular Magnet)

(Example 14)

A motor of Example 14 including the following rotor and stator was manufactured.

(Rotor of Example 14)

A cylindrical Co shaft having an outer diameter of about 0.46 mm and a length of 20 mm was prepared. Next, a magnetic material layer of $SmCo_2$ was formed on the outer circumferential surface of the Co shaft by an electrolytic plating method in molten salt, and then the magnetic material layer was heat-treated to form a $SmCo_5$ tubular magnet as a tubular magnet, thereby obtaining the rotor of Example 14. The conditions of the molten salt immersion method were the same as in Example 2, and a thickness of the tubular magnet was changed by changing the immersion time.
Note that by the heat treatment, the $SmCo_5$ tubular magnet was formed directly on the $Sm_2Co_{17}$ layer formed on the Co shaft. That is, in the present Example, the Co shaft and the $Sm_2Co_{17}$ layer constituted a ferromagnetic shaft as a base material on whose outer circumferential surface a tubular magnet was formed, and the ferromagnetic shaft and the tubular magnet were in direct contact with each other. An inner diameter of the tubular magnet and an outer diameter of the ferromagnetic shaft were 0.46 mm, an outer diameter of the tubular magnet was 1.36 mm, a thickness of the tubular magnet was 450 $\mu$m, and an axial length L of the tubular magnet was 10 mm. The magnetization easy axis of the tubular magnet was oriented in the radial direction, the magnetization direction was also the same direction as the magnetization easy axis (radial orientation), and the number of poles of the outer circumferential surface of the tubular magnet was two.

(Stator of Example 14)

A container made of SUS430 having an inner diameter of 2 mm was prepared. As illustrated in FIG. 6, a yoke and a coil were disposed in the container to obtain the stator of Example 14. A thickness of the yoke was 0.22 mm. The number of coils in the stator was three, and the number of turns per coil was three. The total number of conductors, current amperes per conductor, and an electric loading of the stator are the same as those in Example 2.

(Example 15)

A motor of Example 15 including the following rotor and stator was manufactured.

(Rotor of Example 15)

The rotor of Example 15 was obtained in the same manner as in Example 14 except for using a cylindrical Co shaft having an outer diameter of about 0.56 mm and a length of 20 mm and the immersion time. An inner diameter of the tubular magnet and an outer diameter of the ferromagnetic shaft were 0.56 mm, an outer diameter of the tubular magnet was 1.36 mm, a thickness of the tubular magnet was 400 $\mu$m, and an axial length L of the tubular magnet was 10 mm.

(Stator of Example 15)

The stator was the same as in Example 14.

(Example 16)

A motor of Example 16 including the following rotor and stator was manufactured.

(Rotor of Example 16)

The rotor of Example 16 was obtained in the same manner as in Example 14 except for using a cylindrical Co shaft having an outer diameter of about 0.66 mm and a length of 20 mm and the immersion time. An inner diameter of the tubular magnet and an outer diameter of the ferromagnetic shaft were 0.66 mm, an outer diameter of the tubular magnet was 1.36 mm, a thickness of the tubular magnet was 350 $\mu$m, and an axial length L of the tubular magnet was 10 mm.

(Stator of Example 16)

The stator of Example 16 was the same as the stator of Example 14.

(Example 17)

A motor of Example 17 including the following rotor and stator was manufactured.

(Rotor of Example 17)

The rotor of Example 17 was obtained in the same manner as in Example 14 except for using a cylindrical Co shaft having an outer diameter of about 0.76 mm and a length of 20 mm and the immersion time. An inner diameter of the tubular magnet and an outer diameter of the ferromagnetic shaft were 0.76 mm, an outer diameter of the tubular magnet was 1.36 mm, a thickness of the tubular magnet was 300 $\mu$m, and an axial length L of the tubular magnet was 10 mm.

(Stator of Example 17)

The stator of Example 17 was the same as the stator of Example 14.

(Example 18)

A motor of Example 18 including the following rotor and stator was manufactured.

(Rotor of Example 18)

The rotor of Example 18 was obtained in the same manner as in Example 14 except for using a cylindrical Co shaft having an outer diameter of about 0.86 mm and a length of 20 mm and the immersion time. An inner diameter of the tubular magnet and an outer diameter of the ferromagnetic shaft were 0.86 mm, an outer diameter of the tubular magnet was 1.36 mm, a thickness of the tubular magnet was 250 $\mu$m, and an axial length L of the tubular magnet was 10 mm.

(Stator of Example 18)

The stator of Example 18 was the same as the stator of Example 14.

(Example 19)

A motor of Example 19 including the following rotor and stator was manufactured.

(Rotor of Example 19)

The rotor of Example 19 was obtained in the same manner as in Example 14 except for using a cylindrical Co shaft having an outer diameter of about 0.96 mm and a length of 20 mm and the immersion time. An inner diameter of the tubular magnet and an outer diameter of the ferromagnetic shaft were 0.96 mm, an outer diameter of the tubular magnet was 1.36 mm, a thickness of the tubular magnet was 200 $\mu$m, and an axial length L of the tubular magnet was 10 mm.

(Stator of Example 19)

The stator of Example 19 was the same as the stator of Example 14.

(Example 20)

A motor of Example 20 including the following rotor and stator was manufactured.

(Rotor of Example 20)

The rotor of Example 20 was obtained in the same manner as in Example 14 except for using a cylindrical Co shaft having an outer diameter of about 1.4 mm and a length of 20 mm and the immersion time. An inner diameter of the tubular magnet and an outer diameter of the ferromagnetic shaft were 1.4 mm, an outer diameter of the tubular magnet was 1.5 mm, a thickness of the tubular magnet was 50 $\mu$m, and an axial length L of the tubular magnet was 10 mm.

(Stator of Example 20)

The stator of Example 20 was the same as the stator of Example 14.

(Example 21)

A motor of Example 21 including the following rotor and stator was manufactured.

(Rotor of Example 21)

The rotor of Example 21 was obtained in the same manner as in Example 14 except for using a cylindrical Co shaft having an outer diameter of about 1.46 mm and a length of 20 mm and the immersion time. An inner diameter of the tubular magnet and an outer diameter of the ferromagnetic shaft were 1.46 mm, an outer diameter of the tubular magnet was 1.5 mm, a thickness of the tubular magnet was 20 $\mu$m, and an axial length L of the tubular magnet was 10 mm.

(Stator of Example 21)

The stator of Example 21 was the same as the stator of Example 14.

(Example 22)

A motor of Example 22 including the following rotor and stator was manufactured.

(Rotor of Example 22)

The rotor of Example 22 was obtained in the same manner as in Example 14 except for using a cylindrical Co shaft having an outer diameter of about 1.48 mm and a length of 20 mm and the immersion time. An inner diameter of the tubular magnet and an outer diameter of the ferromagnetic shaft were 1.48 mm, an outer diameter of the tubular magnet was 1.5 mm, a thickness of the tubular magnet was 10 $\mu$m, and an axial length L of the tubular magnet was 10 mm.

(Stator of Example 22)

The stator of Example 22 was the same as the stator of Example 14.

(Example 23)

A motor of Example 23 including the following rotor and stator was manufactured.

(Rotor of Example 23)

The rotor of Example 23 was obtained in the same manner as in Example 14 except for using a cylindrical Co shaft having an outer diameter of about 1.482 mm and a length of 20 mm and the immersion time. An inner diameter of the tubular magnet and an outer diameter of the ferromagnetic shaft were 1.482 mm, an outer diameter of the tubular magnet was 1.5 mm, a thickness of the tubular magnet was 9 $\mu$m, and an axial length L of the tubular magnet was 10 mm.

(Stator of Example 22)

The stator of Example 22 was the same as the stator of Example 14.
The results are shown in Table 3.

[Table 3]

| Table 3 | Example 14 | Example 15 | Example 16 | Example 17 | Example 18 | Example 19 | Example 20 | Example 21 | Example 22 | Example 23 |
|---|---|---|---|---|---|---|---|---|---|---|
| Number of poles of outer circumferential surface of tubular magnet | 2 | 2 | 2 | 2 | 2 | 2 | 2 | 2 | 2 | 2 |
| Number of coils of stator | 3 | 3 | 3 | 3 | 3 | 3 | 3 | 3 | 3 | 3 |
| Number n of turns per coil | 3 | 3 | 3 | 3 | 3 | 3 | 3 | 3 | 3 | 3 |
| Total number of conductors (turns$\times$2$\times$ number of coils) N | 18 | 18 | 18 | 18 | 18 | 18 | 18 | 18 | 18 | 18 |
| Current I per conductor | 10.0 | 10.0 | 10.0 | 10.0 | 10.0 | 10.0 | 10.0 | 10.0 | 10.0 | 10.0 |
| Electrical loading (total number of conductors$\times$current value) NI | 180 | 180 | 180 | 180 | 180 | 180 | 180 | 180 | 180 | 180 |
| Magnetization easy axis and magnetization direction of tubular magnet | Radial orientation | Radial orientation | Radial orientation | Radial orientation | Radial orientation | Radial orientation | Radial orientation | Radial orientation | Radial orientation | Radial orientation |
| Material of portion of ferromagnetic shaft where tubular magnet is provided | Co + $Sm_2Co_{17}$ layer | Co + $Sm_2Co_{17}$ layer | Co + $Sm_2Co_{17}$ layer | Co + $Sm_2Co_{17}$ layer | Co + $Sm_2Co_{17}$ layer | Co + $Sm_2Co_{17}$ layer | Co + $Sm_2Co_{17}$ layer | Co + $Sm_2Co_{17}$ layer | Co + $Sm_2Co_{17}$ layer | Co + $Sm_2Co_{17}$ layer |
| Inner diameter d1 [mm] of tubular magnet | 0.46 | 0.56 | 0.66 | 0.76 | 0.86 | 0.96 | 1.4 | 1.46 | 1.48 | 1.482 |

| Table 3 | Example 14 | Example 15 | Example 16 | Example 17 | Example 18 | Example 19 | Example 20 | Example 21 | Example 22 | Example 23 |
|---|---|---|---|---|---|---|---|---|---|---|
| Outer diameter [mm] of ferromagnetic shaft | 0.46 | 0.56 | 0.66 | 0.76 | 0.86 | 0.96 | 1.4 | 1.46 | 1.48 | 1.482 |
| Relationship between ferromagnetic shaft and tubular magnet | Direct contact | Direct contact | Direct contact | Direct contact | Direct contact | Direct contact | Direct contact | Direct contact | Direct contact | Direct contact |
| Cylindrical magnet composition and manufacturing method | $SmCo_5$ Molten salt immersion | $SmCo_5$ Molten salt immersion | $SmCo_5$ Molten salt immersion | $SmCo_5$ Molten salt immersion | $SmCo_5$ Molten salt immersion | $SmCo_5$ Molten salt immersion | $SmCo_5$ Molten salt immersion | $SmCo_5$ Molten salt immersion | $SmCo_5$ Molten salt immersion | $SmCo_5$ Molten salt immersion |
| Thickness [μm] of tubular magnet | 450 | 400 | 350 | 300 | 250 | 200 | 50 | 20 | 10 | 9 |
| Axial length L [mm] of tubular magnet | 10 | 10 | 10 | 10 | 10 | 10 | 10 | 10 | 10 | 10 |
| Outer diameter d2 [mm] of tubular magnet | 1.36 | 1.36 | 1.36 | 1.36 | 1.36 | 1.36 | 1.5 | 1.5 | 1.5 | 1.5 |
| Material of container | SUS430 | SUS430 | SUS430 | SUS430 | SUS430 | SUS430 | SUS430 | SUS430 | SUS430 | SUS430 |
| Thickness [mm] of yoke | 0.22 | 0.22 | 0.22 | 0.22 | 0.22 | 0.22 | 0.15 | 0.15 | 0.15 | 0.15 |
| Inner diameter [mm] of container | 2 | 2 | 2 | 2 | 2 | 2 | 2 | 2 | 2 | 2 |
| Thickness [μm] of tubular magnet | 450 | 400 | 350 | 300 | 250 | 200 | 50 | 20 | 10 | 9 |
| Torque [μN·m] | 0.3363 | 0.3434 | 0.3482 | 0.3493 | 0.3463 | 0.3377 | 0.2078 | 0.1148 | 0.0632 | 0.0320 |

When the thickness of the tubular magnet is in the range of 10 to 300 $\mu$m, a torque is increasing as the thickness increases. When the thickness of the tubular magnet is less than 10 $\mu$m, the torque tends to be small. When the thickness of the tubular magnet exceeds 300 $\mu$m, the torque does not increase much.

Reference Signs List

| | |
|---|---|
| 10 | rotor |
| 12 | ferromagnetic shaft |
| 12E | exposed portion |
| 14 | tubular magnet |
| 20 | stator |
| 30 | container |
| 100 | motor. |

**Claims**

1. A rotor comprising:

   a ferromagnetic shaft; and
   a tubular magnet covering an outer circumferential surface of the ferromagnetic shaft,
   wherein a magnetization easy axis of the tubular magnet is oriented in a radial direction.

2. The rotor according to claim 1, wherein the ferromagnetic shaft and the tubular magnet are in direct contact.

3. The rotor according to claim 1 or 2, wherein the tubular magnet has an inner diameter of 2 mm or less.

4. The rotor according to claim 1 or 2, wherein an inner diameter d1 of the tubular magnet and an axial length L of the tubular magnet satisfy a formula below.

$$1 \leq L/d1$$

5. The rotor according to claim 1 or 2, wherein the tubular magnet has a thickness of 10 to 300 $\mu$m.

6. The rotor according to claim 1 or 2, wherein a thickness distribution (coefficient of variation) of the tubular magnet is 50 $\mu$m or less.

7. The rotor according to claim 1 or 2, wherein an outer circumferential surface of the tubular magnet has a surface roughness Rz of 20 $\mu$m or less.

8. The rotor according to claim 1 or 2, wherein each of both ends of the ferromagnetic shaft includes an exposed portion configured to be uncovered with the tubular magnet.

9. The rotor according to claim 1 or 2, wherein the tubular magnet is magnetized in a radial direction, and an outer circumferential surface of the tubular magnet includes four or more magnetic poles.

10. The rotor according to claim 1 or 2, wherein the ferromagnetic shaft includes a cobalt columnar body and the tubular magnet is a samarium cobalt magnet.

11. The rotor according to claim 10, wherein the samarium cobalt magnet includes a $SmCo_5$ magnet, and a portion of the ferromagnetic shaft covered with the tubular magnet includes a $Sm_2Co_{17}$ layer and a cobalt columnar body in order from a side of the tubular magnet.

12. A motor comprising: the rotor according to claim 1 or 2; and a stator.

**13.** The motor according to claim 12, further comprising a cylindrical container configured to house the rotor and the stator, wherein the container has an outer diameter of 3 mm or less.

# Fig.1

*Fig.2*

# *Fig.3*

(a)

(b)

(c)

(d)

## Fig.4

(a)

(b)

(c)

Fig.5

**Fig.6**

<table>
<tr><td colspan="2" align="center">INTERNATIONAL SEARCH REPORT</td><td>International application No.<br><br>**PCT/JP2022/031940**</td></tr>
</table>

**A.    CLASSIFICATION OF SUBJECT MATTER**

*H02K 1/2733*(2022.01)i
FI:    H02K1/2733

According to International Patent Classification (IPC) or to both national classification and IPC

**B.    FIELDS SEARCHED**

Minimum documentation searched (classification system followed by classification symbols)

H02K1/2733

Documentation searched other than minimum documentation to the extent that such documents are included in the fields searched

Published examined utility model applications of Japan 1922-1996
Published unexamined utility model applications of Japan 1971-2022
Registered utility model specifications of Japan 1996-2022
Published registered utility model applications of Japan 1994-2022

Electronic data base consulted during the international search (name of data base and, where practicable, search terms used)

**C.    DOCUMENTS CONSIDERED TO BE RELEVANT**

| Category* | Citation of document, with indication, where appropriate, of the relevant passages | Relevant to claim No. |
|---|---|---|
| X | JP 2016-86620 A (TOYOTA IND CORP) 19 May 2016 (2016-05-19)<br>     paragraphs [0015]-[0043], fig. 1-6 | 1-4, 6, 9, 12-13 |
| Y | | 5, 7-8, 10-11 |
| X | JP 2000-175387 A (SHIN ETSU CHEM CO LTD) 23 June 2000 (2000-06-23)<br>     paragraphs [0008]-[0023], fig. 1-6 | 1-4, 6, 9, 12-13 |
| Y | | 5, 7-8 |
| Y | JP 62-260552 A (SEIKO EPSON CORP) 12 November 1987 (1987-11-12)<br>     table 6 | 5 |
| Y | JP 2005-50988 A (NICHIA CHEM IND LTD) 24 February 2005 (2005-02-24)<br>     paragraphs [0020], [0040] | 7, 10-11 |
| Y | JP 2011-83136 A (PANASONIC CORP) 21 April 2011 (2011-04-21)<br>     fig. 1 | 8 |

☐ Further documents are listed in the continuation of Box C.        ☑ See patent family annex.

| | |
|---|---|
| *    Special categories of cited documents:<br>"A"   document defining the general state of the art which is not considered to be of particular relevance<br>"E"   earlier application or patent but published on or after the international filing date<br>"L"   document which may throw doubts on priority claim(s) or which is cited to establish the publication date of another citation or other special reason (as specified)<br>"O"   document referring to an oral disclosure, use, exhibition or other means<br>"P"   document published prior to the international filing date but later than the priority date claimed | "T"   later document published after the international filing date or priority date and not in conflict with the application but cited to understand the principle or theory underlying the invention<br>"X"   document of particular relevance; the claimed invention cannot be considered novel or cannot be considered to involve an inventive step when the document is taken alone<br>"Y"   document of particular relevance; the claimed invention cannot be considered to involve an inventive step when the document is combined with one or more other such documents, such combination being obvious to a person skilled in the art<br>"&"   document member of the same patent family |
| Date of the actual completion of the international search<br><br>**26 September 2022** | Date of mailing of the international search report<br><br>**11 October 2022** |
| Name and mailing address of the ISA/JP<br><br>**Japan Patent Office (ISA/JP)**<br>**3-4-3 Kasumigaseki, Chiyoda-ku, Tokyo 100-8915**<br>**Japan** | Authorized officer<br><br><br><br>Telephone No. |

Form PCT/ISA/210 (second sheet) (January 2015)

**INTERNATIONAL SEARCH REPORT**
Information on patent family members

International application No.

**PCT/JP2022/031940**

| Patent document cited in search report | | | Publication date (day/month/year) | Patent family member(s) | Publication date (day/month/year) |
|---|---|---|---|---|---|
| JP | 2016-86620 | A | 19 May 2016 | DE 102015220952 A1 | |
| JP | 2000-175387 | A | 23 June 2000 | US 2002/0089249 A1 paragraphs [0028]-[0095], fig. 1-8 | |
| JP | 62-260552 | A | 12 November 1987 | (Family: none) | |
| JP | 2005-50988 | A | 24 February 2005 | (Family: none) | |
| JP | 2011-83136 | A | 21 April 2011 | (Family: none) | |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2015092792 A

- JP 5089979 B